(19) Europäisches Patentamt / European Patent Office / Office européen des brevets

(11) **EP 3 823 933 B1**

(12) **EUROPEAN PATENT SPECIFICATION**

(45) Date of publication and mention
of the grant of the patent:
**15.06.2022 Bulletin 2022/24**

(21) Application number: **19737792.2**

(22) Date of filing: **16.07.2019**

(51) International Patent Classification (IPC):
$C02F\ 3/34$ (2006.01)  $C02F\ 1/66$ (2006.01)
$C02F\ 103/36$ (2006.01)  $C02F\ 103/28$ (2006.01)
$C02F\ 101/10$ (2006.01)

(52) Cooperative Patent Classification (CPC):
**C02F 3/345; C02F 1/66;** C02F 2101/101;
C02F 2103/28; C02F 2103/365

(86) International application number:
**PCT/EP2019/069138**

(87) International publication number:
**WO 2020/016238 (23.01.2020 Gazette 2020/04)**

(54) **BIOLOGICAL TREATMENT OF INDUSTRIAL ALKALINE STREAMS**

**BIOLOGISCHE BEHANDLUNG VON INDUSTRIELLEN ALKALISTRÖMEN**

**TRAITEMENT BIOLOGIQUE DE FLUX INDUSTRIELS ALCALINS**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2018 EP 18184411**

(43) Date of publication of application:
**26.05.2021 Bulletin 2021/21**

(60) Divisional application:
**22159369.2**

(73) Proprietors:
• **Stora Enso Oyj**
**00101 Helsinki (FI)**
• **Paques I.P. B.V.**
**8561 EL Balk (NL)**

(72) Inventors:
• **VAN ZESSEN, Erik**
**8447 DX Heerenveen (NL)**
• **NOORDINK, Michel Paulus Maria**
**8023 CH Zwolle (NL)**
• **WADSBORN, Rickard**
**144 64 Rönninge (SE)**
• **TIMONEN, Olli**
**53300 Lappeenranta (FI)**
• **BJÖRK, Maria**
**653 49 Karlstad (SE)**
• **KOTILAINEN, Ari**
**80260 Joensuu (FI)**

(74) Representative: **Nederlandsch Octrooibureau**
**P.O. Box 29720**
**2502 LS The Hague (NL)**

(56) References cited:
**WO-A1-94/29227**   **US-A- 6 156 205**
**US-A1- 2017 009 258**   **US-A1- 2017 369 349**

**Description**

**Field of the invention**

The present invention relates to a process for the biological treatment of industrial alkaline streams.

**Background art**

Many industrial processes result in alkaline streams that pose environmental processing challenges due to the mix of salts and contaminants, and if the alkaline stream is no longer needed there can be issues with safe disposal of such streams. An example of an industrial alkaline stream is spent caustic, which is an industrial caustic solution that has become exhausted and is no longer useful (i.e. spent).

Different spent caustics are known. Ethylene spent caustic comes from the caustic scrubbing of cracked gas from an ethylene cracker. This liquor is produced by a caustic scrubbing tower. Ethylene product gas is contaminated with $H_2S(g)$ and $CO_2(g)$, and those contaminants are removed by absorption in the caustic scrubbing tower to produce $NaHS(aq)$ and $Na_2CO_3(aq)$. The sodium hydroxide is consumed and the resulting wastewater (ethylene spent caustic) is contaminated with the sulfides and carbonates and a small fraction of organic compounds.

Refinery spent caustic comes from multiple sources: the Merox processing of gasoline; the Merox processing of kerosene/jet fuel; and the caustic scrubbing/Merox processing of LPG. In these streams sulfides and organic acids are removed from the product streams into the caustic phase. The sodium hydroxide is consumed and the resulting wastewaters (cresylic for gasoline; naphthenic for kerosene/jet fuel; sulfidic for LPG -spent caustics) are often mixed and called refinery spent caustic. This spent caustic is contaminated with sulfides, carbonates, and in many cases a high fraction of heavy organic acids.

Another industrial alkaline stream is pulp mill liquor from the paper making process. Alkaline streams at pulp mills include streams commonly referred to as white, black and green liquors. Green liquor is produced from dissolving a smelt from a Kraft recovery furnace. Green liquor normally comprises sodium carbonate ($Na_2CO_3$), sodium sulfide ($Na_2S$) and sodium hydroxide (NaOH) as the main compounds. White liquor comprises sodium sulfide and sodium hydroxide as the main components, and is contaminated by carbonate. Black liquor comprises lignin derivatives as the main components and sodium sulfide, as well as carbonate.

Typically, industrial alkaline streams are contaminated by carbonate. The presence of carbonate in the industrial alkaline streams complicates the processing of industrial alkaline streams due to the occurrence of undesirable carbonate precipitation in reactors and supply lines.

Processes for the biological treatment of a spent caustic containing sulfides are known in the art and for example described in WO9804503, US2017/009258 and US6156205. In the process described in WO9804503 a spent caustic solution is introduced into a single aerobic reactor containing sulfide-oxidizing bacteria, and the sulfides are partly converted to elemental sulfur and partly to sulfate by controlling the redox potential in the reactor at a value below -300 mV against an Ag/ AgCl electrode. A disadvantage of the described process is that a very large reactor is needed in order to convert the spent caustic to levels low enough to meet modern regulatory requirements for discharge into the environment.

WO2005044742 discloses relates to the treatment of sulfur-containing salts using biological oxidation with the possibility of recovering dissolved salts. The sole example discloses a process in which an aqueous solution is treated, which contained about 75 g/l of sodium (3 M) and 45 g/l of dissolved sulfide. The solution was fed together with a nutrient solution containing among other a nitrogen and a phosphorous source to a continuously operating 5 liter bioreactor at a temperature of 30 °C containing *Thio(alkali)vibrio* strains comprising strain DSM 13738. A gas recycle over the bioreactor ensured mixing. Oxygen was added to the gas recycle in order to maintain the redox potential in solution to a value between-100 and-450 mV, preferably-360 to-430 mV measured with a platinum electrode against an Ag/AgCl reference electrode. The pH was measured with a glass electrode. It was controlled at a value between 9 and 12, in particular at about 10.5 through the injection of $CO_2$ gas in the gas recycle. *Thio(alkali)vibrio* bacteria converted the dissolved sulfide to elemental sulfur. Effluent from the bioreactor was led through a settler where the sulfur was separated from the liquid.

WO2009101090A1 provides a method and apparatus for biologically treating a spent caustic to provide a treated spent caustic, said method comprising the steps of: (a) passing a spent caustic stream (25) comprising water, alkali metal hydroxide and sulfide to a first bioreactor (30); (b) biologically oxidizing sulfide in the first bioreactor (30) with sulfide-oxidizing bacteria to form sulfur ($S_0$) and sulfate to provide a partially oxidized spent caustic comprising sulfur (S0) and sulfate; (c) passing the partially oxidized spent caustic to a second bioractor (40) where at least a portion of the partially oxidized spent caustic is further oxidized with sulfide-oxidizing bacteria to generate sulfate from sulfur ($S_0$) to provide a treated spent caustic comprising sulfate.

There remains a need for an improved method for treating industrial alkaline streams comprising sulfide and carbonate.

## Summary of the invention

The present invention provides an improved method for treating industrial alkaline streams comprising sulfide and carbonate according to claim 1. According to the present invention, a process as defined above is provided, in which sulfur (present as sulfide) is removed from an industrial alkaline stream comprising sulphide and carbonate in the form of elemental sulfur by contacting the waste stream with sulfide oxidizing bacteria. This results in a treated waste stream that is less prone to undesirable carbonate precipitation, for example pirssonite precipitation, and consequently less blocking of supply lines results.

Without wishing to be bound by theory, it is believed that by removing the sulfur from the industrial alkaline stream, by oxidizing the sulfide to elemental sulfur, the sulfidity of the alkaline waste water decreases resulting in an increase in solubility of carbonate salts, such as pirssonite.

It has been found that it is possible to efficiently and specifically reduce the amount of undesirable carbonate precipitation in industrial alkaline streams by reducing the sulfidity of the industrial alkaline stream.

A further advantage of the present invention is that by mixing the industrial alkaline stream with a portion of the sulfide oxidizing bacteria prior to supplying the industrial alkaline stream to the bioreactor, conditions are maintained in the bioreactor that stimulate the sulfide oxidizing bacteria. The process of the present invention does not require costly, energetically inefficient dilution of the high salt concentration of industrial alkaline streams. For example, the process according to the invention can be used for regenerating NaHS containing caustic liquids back to NaOH e.g in various scrubbing processes where $H_2S$ scrubbing is done by using NaOH as agent, therefore this invention can be used as a replacement for NaOH capturing processes from waste streams.

## Short description of drawings

The present invention will be discussed in more detail below, with reference to the attached drawings:

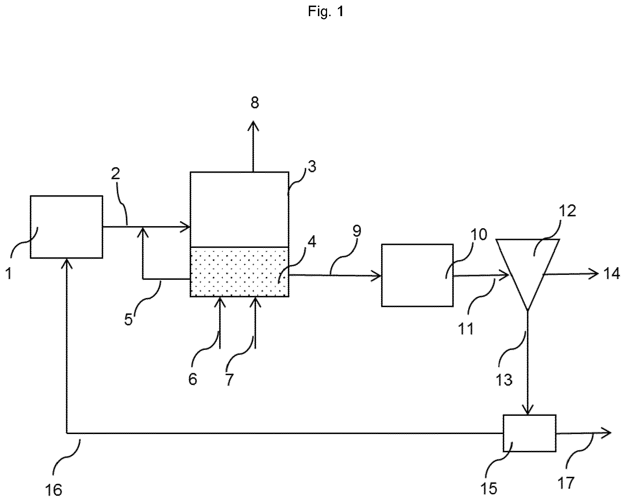

Fig. 1 shows a process diagram according to the present invention.

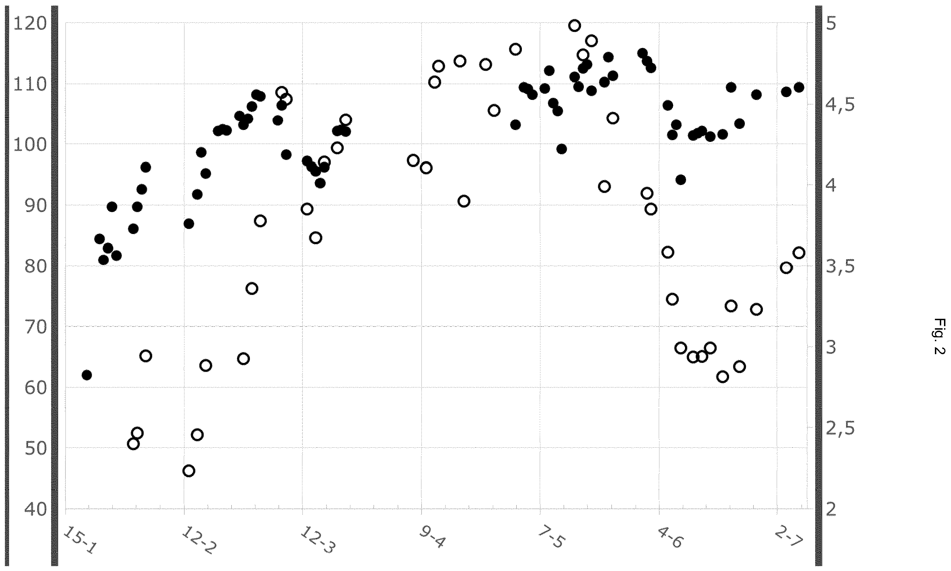

Fig. 2 shows a graph of sodium concentration and conductivity in the bioreactor. The black circles is the conductivity in mS/cm (primary y axis (left)). The while circles is the sodium concentration in mol (secondary y axis (right)). The time course of the process is plotted in months (day-month axis label) on the x axis.

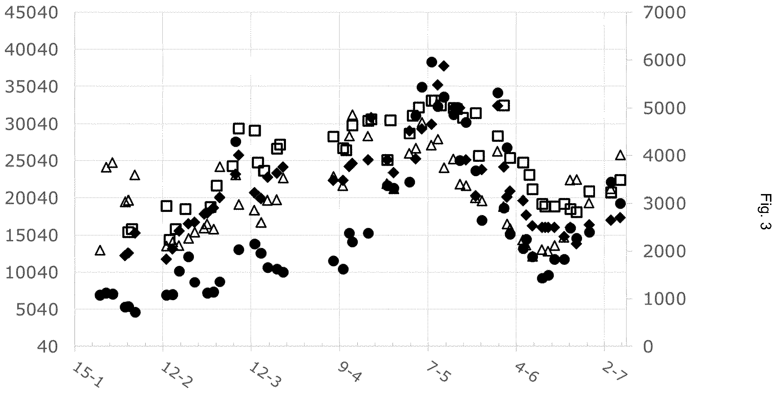

Fig. 3 shows a graph of sulfate and sulfate & sodium, alkalinity in the bioreactor. The white triangles is the sulphate concentration and the black circles is the thiosulphate concentration.(primary y axis (left)). The black diamonds is the alkalinity in mmol (secondary y axis (right)) and the white squares is sodium concentration (secondary y axis (right)). The time course of the process is plotted in months (day-month axis label)on the x axis.

## Description of embodiments

The term "industrial alkaline stream" as used herein means a melt, liquid or aqueous process fluid having a pH > 8.

The term "spent caustic" as used herein in means an aqueous NaHS solution. Typically, such a solution is obtained from the reaction of sodium hydroxide and hydrogen sulphide in the refinery and chemical industries. Typically, spent caustics have a pH of more than 12 and a sulphide concentration exceeding 2 wt.%.

The term "pulp mill stream" as used herein means a melt, liquid or aqueous process fluid originating from a pulp mill, for example green liquor, white liquor and black liquor.

The term "green liquor" as used herein means the liquor produced from dissolving a smelt from a Kraft recovery furnace. Green liquor normally comprises sodium carbonate ($Na_2CO_3$), sodium sulfide ($Na_2S$) and sodium hydroxide (NaOH) as the main compounds. Typically, such a liquor has total alkali concentration of more than 2 M.

The term "white liquor" as used herein means a liquor comprising sodium sulfide and sodium hydroxide as the main components. Typically, such a liquor has total alkali concentration of more than 2 M

"Chemical oxygen Demand" (COD) refers to organic material that can be oxidised to smaller molecules, ultimately to carbon dioxide and water, and the term expresses the amount of oxygen that would be needed to oxidise the organic material in a litre of wastewater.

The term "black liquor" as used herein means a liquor comprising lignin degradation products and other dissolved wood components as the main components and sodium sulfide originating from a pulping process. Typically, such a liquor has total sodium concentration of more than 15% on dry solids content. and preferably a total alkali concentration of more than 1M.

The term "sulfur compounds" as used herein means compounds comprising sulfur, for example metal salts of sulfide, sulfide, sulfate, sulphite, thiosulfate, said metal being sodium or potassium.

The term "sulfide" as used herein relates to sulfide is to any form of sulfide, including sulfide anions, mono-hydrogen sulfide ions, hydrogen sulfide, polysulfide, and organic sulfides such as lower alkyl mercaptans and carbon disulfide.

The term "sulfidity" as used herein means the sodium sulfide/sodium hydroxide ratio. Sulfidity is calculated by dividing the weight of sodium sulfide (expressed in g/l on $Na_2O$ basis) by the weight of sodium hydroxide plus sodium sulfide (also expressed in g/l on $Na_2O$ basis) multiplied by 100.

The term "total alkali" as used herein means all $Na^+$, and equivalents such as $K^+$, containing compounds.

The term "carbonate" as used herein relates to carbonate in any form of carbonate, including carbonate anions, sodium hydrogen carbonate, sodium carbonate, Burkeite ($Na_6(SO_4)_2(CO_3)$) and pirssonite ($Na_2CO_3 \cdot CaCO_3 \cdot 2H_2O$).

The present invention is not limited to any particular industrial alkaline stream. It has been found that industrial alkaline streams comprising significant amounts of sulfide and carbonate can subjected to sulphide oxidizing bacteria without dilution. In addition, a treated industrial alkaline stream is provided that is less prone to carbonate precipitation.

Preferably, the industrial alkaline stream is an ethylene spent caustic, refinery spent caustic or pulp mill stream. In a preferred embodiment, the industrial alkaline stream is a waste stream from a Kraft pulp mill, such as green, white liquor or black liquor.

The industrial alkaline stream typically contains a high concentration of sulphide, for example above 10 g/l. In case the autotrophic sulphide oxidizing bacteria are directly exposed to this, their aerobic activity has to compete with the abiotic (non-biological oxidation) reaction producing thiosulphate as shown in Equation 1. The thiosulphate production does not regenerate caustic strength.

$$2HS^- + 2\ O2 \longrightarrow S_2O_3^{2-} + H_2O \qquad \text{Equation 1}$$

Without wishing to be bound by theory, thiosulphate production depends on both the (poly)sulphide concentration as well as the oxygen concentration. The reaction rate can be described with

$$dHS/dt = -k\ [Sx]\ [O_2]^{0.6} \qquad \text{Equation 2}$$

with the concentrations in mol/l and k equals 1 ($L^{0.6}/mol^{0.6}/s$)

Due to the presence of sulphur in the solution, polysulphides are largely present in the bioreactor. The pH of the bioreactor is preferably in the range of 8 to 11 at 30 °C, and the polysulphide dissociation constant is ~9. Hence almost all sulphide is present as polysulphide, as summarized in Equation 3:

$$S_{x+2}^{2-} + 1.5\ O_2 \rightarrow S_2O_3^{2-} + S_x \qquad \text{Equation 3}$$

The inventors have found that when a portion of the sulfide oxidizing bacteria is removed from the bioreactor and mixed with the industrial alkaline stream prior to supplying the industrial alkaline stream to the bioreactor in step b), the production of thiosulphate is reduced and the production of elemental sulfur is increased.

The alkaline waste steam may comprise, in addition to sulfide, other sulfur compounds. Sulfur compounds that may be present include any sulfur species, such as sulfate, sulfite, sulfide, thiosulfate, etc. Levels of sulfur compounds may vary widely e.g. between 0.05 and 50 g of the sulfur compounds (on elemental sulfur basis) per L, in particular between 0.1 and 40 g sulfur per L. On sulfate basis, the weight amounts are three times the amount on elemental sulfur basis because of the molar weight ratio $SO_4$ / $S°$ of 96/32. Thus at least 0.05 g (50 mg) of sulfur compounds per L on elemental sulfur basis corresponds to at least 150 mg of sulfate per L. The present invention has the advantage that the process does not require diluting of the total amount of sulfur compounds prior to mixing with the sulfide oxidizing bacteria.

The sulfide concentration in the aqueous solution to be treated is not critical in the process according to the invention. Feed streams with sulfide concentrations (expressed as by weight of sulfur) as high as 30 grams per litre or even higher may be used. Preferably, the sulfide concentration in the industrial alkaline stream is in the range of from 10 mg/L to 100 g/L, more preferably of from 20 mg/L to 80 g/L, even more preferably of from 0.1 g/L to 60 g/L, still more preferably of from 0.5 g/L to 30 g/L. For example, in a preferred embodiment, the industrial alkaline stream comprises at least 15 g/L sulfide, preferably at least 20 g/L sulfide even more preferably at least 25 g/L sulfide.

The industrial alkaline stream comprises carbonate. The industrial alkaline stream has a carbonate concentration in the range of at least 50 g/L, preferably at least 60 g/L.

The industrial alkaline stream preferably has a conductivity of at least 70 mS/cm, preferably at least 80 mS/cm, more preferably at least 90 mS/cm, most preferably at least 100 mS/cm. It has been found that the process of the present invention has the advantage that waste streams having a high conductivity can be tolerated in the bioreactor.

Preferably, the industrial alkaline stream has a sodium concentration in the range of 1 to 6 Molar, preferably 2 to 5 Molar, more preferably 2.5 to 4.5 Molar.

In the process according to the invention any suitable autotrophic sulfide-oxidising bacteria may be used. Suitable sulfide-oxidising bacteria are known in the art. The autotrophic sulfide oxidizing bacteria preferably belong to the group of *Thioalkalimicrobium, and/or Thioalkalivibrio*. Preferably autotrophic sulfide- oxidising bacteria of the genera *Halothiobacillus, Thioalkalispira, Thioalkalibacter, Thiobacillus* or *Thiomicrospira* and related bacteria are used. The bacteria may be used as such, or may be supported on a dispersed carrier or may be immobilised on a solid carrier.

The chemical reaction carried out by the bacteria is shown below.

$$HS- + \tfrac{1}{2} O_2 ---> S + OH^- \qquad\qquad \text{Equation 3}$$

$$HS- + 2 O_2 ---> SO_4^{2-} + H^+ \qquad\qquad \text{Equation 4}$$

It is apparent from this reaction scheme that the bacteria produce hydroxide ions, and consequently the pH will increase over time. Therefore, a pH adjustment agent is added to the bioreactor.

A pH adjustment agent is supplied during step b) to maintain a pH in the range of 8 to 11 at 30 °C, preferably in the range of 9 to 10.5 at 30 °C, even more preferably in the range of 9.2 to 10.2 at 30 °C, even more preferably 9.4 to 10.0 at 30 °C The pH adjustment agent is selected from carbon dioxide, sour gas, hydrochloric acid, nitric acid and phosphoric acid. Preferably, the pH adjustment agent is carbon dioxide.

The conversion of sulfide to element sulfur takes place in the presence of oxygen. Preferably, the amount of oxygen present in step c) in in the range of 0.5-1.25 mole of oxygen ($O_2$) per mole of $H_2S/HS^-$. The oxygen supplied to the bioreactor is provided by a molecular-oxygen comprising gas. Preferably, the molecular-oxygen comprising gas is air or oxygen-depleted air, i.e. air having less than 20% (by volume) of oxygen, e.g. between 2 and 15 vol.% of oxygen.

The molecular-oxygen containing gas is preferably supplied to the bioreactor in such amount that an optimum amount of oxygen reactant is present for the required oxidation reaction (sufficient for the oxidation to sulfur; not too much in order to avoid sulfate formation) and that sufficient mixing of feed stream with aqueous medium takes place in order to quickly dilute the inlet sulfide concentration.

The sulfide-oxidising reaction in the bioreactor is preferably carried out at a temperature in the range of from 20 to 45 °C. In another preferred embodiment, the process according to the present invention comprises step d) of separating elemental sulfur from the treated industrial alkaline stream to provide a sulfur depleted alkaline stream. The sulfur depleted alkaline stream can be further processed / recycled in an industrial process with a lower risk of carbonate precipitation due to the lower sulfidty, compared to the sulfidity of the industrial alkaline stream prior to treatment by the process described herein. Preferably, said sulfur depleted alkaline stream is reused in an industrial process.

Preferably, the sulfur depleted alkaline stream has a sulfidity of less than 20%, preferably less than 15%, even more preferably less than 10%.

The sulfide oxidizing bacteria require nutrients for their growth and maintenance. Therefore a balanced solution of the essential minerals is dosed to the bioreactor. The concentration of the bacteria is kept at the desired level by supplying the right amount of nutrients.

Preferably, the industrial alkaline stream is not diluted with aqueous diluents, such as water, prior to contacting the sulfide oxidizing bacteria.

The present invention has been described above with reference to a number of exemplary embodiments as shown in the drawings. Modifications and alternative implementations of some parts or elements are possible, and are included in the scope of protection as defined in the appended claims.

Figure 1 shows an installation for carrying a process according to the present invention. A waste stream comprising sulfide and carbonate generated by an industrial process **1** is provided via supply line **2** to bioreactor **3**. A portion of the bioreactor contents **4** is supplied via supply line **5** to blend with the waste stream prior to the waste stream being supplied to the bioreactor **3**. Line **6** feeds gas (air, oxygen) to the bioreactor and line **7** feeds a pH adjustment agent **7** to the bioreactor. The spent air is removed via **8**. In the bioreactor sulfide is oxidized to elemental sulfur by sulfide-oxidizing bacteria. The treated waste stream leaves the bioreactor by line **9** and may optionally be stored in a storage tank **10** before being fed to via line **11** to separator **12**. The separated elemental sulfur slurry is removed via line **13** and the sulfide depleted waste stream is removed via line **14** and optionally fed back into an industial process. The separated elemental sulfur slurry is supplied via line **13** to a processing unit **15,** for example to be dried. Optionally, the elemental sulfur may then be fed via line **16** back into an industrial process **1,** or removed via line **17.**

The calculated sodium concentrated is shown in Figure 2 (sodium equals 2x [sulphate + thiosulphate] + alkalinity). The black circles is the conductivity in mS/cm (primary y axis (left)). The while circles is the sodium concentration in mol (secondary y axis (right)). The time course of the process is plotted in months on the x axis. All concentrations follow the same pattern of increasing and decreasing pattern.

In Figure 3 the concentration of both sulfate and thiosulfate concentration are shown, as well as the measured alkalinity. The white triangles is the sulphate concentration and the black circles is the thiosulphate concentration.(primary y axis (left)). The black diamonds is the alkalinity in mmol (secondary y axis (right)) and the white squares is sodium concentration (secondary y axis (right)). The time course of the process is plotted in months on the x axis.

## Examples

### Measurement methods

The alkalinity of the industrial alkaline stream is determined by bringing sample of said stream to pH 4.0 with hydrochloric acid. The amount of acid needed indicates the alkalinity (buffering capacity) of the liquid. A 100 mL sample of centrifuged or filtered waste stream was pipetted in to a glass beaker and 100 ml demineralized water was added. pH electrode was placed in the solution. The solution in the beaker was titrated with 0.1 M hydrochloric acid to pH 4.0, while the solution is continuously stirred. The volume of titrated hydrochloric acid solution (= Z) was noted and the alkalinity determined by equation 3:

$$\text{Alkalinity} = 0.1 \times \frac{Z}{V} \qquad\qquad (3)$$

Key: Alkalinity Alkalinity of the sample (mol/l)
Z Titrated volume of 0.1 M hydrochloric acid (ml)
V Sample volume (ml)

Oxidation -reduction potential in the bioreactor was monitored using an ORP-sensor (Endress+Hauser).
Anions: $SO_3$, $SO_4$, $S_2O_5$ were measured according to SFS-EN ISO 10304-1.
Cation concentrations were measured by ICP analysis.
Sulfide ($HS^-$) was measured by titration according to standard method SCAN-N 5:83, Scandinavian Pulp, Paper and Board Testing Committee, Revised 1983.
Carbonate ($CO_3$) was measured according to standard method SCAN-N 32:1998, Scandinavian Pulp, Paper and Board Testing Committee, Revised 1998.

### Example 1

A bioreactor (5L) is fed with a sulfide rich stream (influent) from a holding tank under $N_2$ atmosphere. Prior to supplying the sulfide rich stream to the bioreactor, the stream to the bioreactor it is mixed with a portion of the bioreactor contents.
A continuously fed system consisting of one bioreactor series was used. The system was operated under sulfide oxidizing conditions (pH 9.5; $Na^+$ >4 M) using autotrophic sulphide oxidising bacteria originating from soda lakes. The reactor have a maximum wet volume of 5 L (0=100 cm). The temperature was maintained at 30 °C by using a water-jacket and a thermostat bath (Shinko, Japan). The influent was fed to the bioreactor using peristaltic pumps (Watson-Marlow), and the effluent from the reactor was controlled by overflow. The sulfide rich stream (influent) was mixed with a portion of the contents of the bioreactor prior to addition to the bioreactor. The pH was monitored using a pH sensor (Endress+Hauser The Netherlands). The oxygen supply was done with air dosing controlled with an ORP-sensor (Endress+Hauser, the Netherlands)
The sulfide oxidizing bacteria present in the bioreactor is a species adapted to an increased salt concentration, but not adapted to the high salt concentration of the green liquor.
After a gradual build-up in about 6 weeks, the conductivity was maintained well above 100 mS/cm. Despite that some periods of precipitation of $NaHCO_3$ the bacteria were still active, even at sodium concentration above 4.5M. This is advantageous, as the current full scale commercial desulfurization (e.g. Thiopaq process) plant will operate at a sodium concentration up to 1.5 M and a maximum operating pH of 9.
The calculated sodium concentrated is shown in Figure 2 (sodium equals 2x [sulfate + thiosulfate] + alkalinity). In Figure 3 the concentration of both sulfate and thiosulfate concentration are shown, as well as the measured alkalinity. Sulphate was measured with Hach-Lange (LCK153), sulphide with Hach-Lange (LCK653) and thiosulphate as COD with Hach-Lange (LCK154)
The composition of the influent and effluent is shown in Table 1.

Table 1

|  | Influent pulp mill stream - green liquor | Effluent 1 | Effluent 2* |
|---|---|---|---|
| **Cations in mg/l** |  |  |  |

(continued)

| | Influent pulp mill stream - green liquor | Effluent 1 | Effluent 2* |
|---|---|---|---|
| **Sodium** | 85497 | 99579 | 98579 |
| **Potassium** | 10754 | 12491 | 13045 |
| **Calcium** | 26 | 9.9 | 5.9 |
| **Magnesium** | 4.2 | 7.2 | 12 |
| **Aluminium** | 3.8 | 1.9 | 1.7 |
| **Copper** | 0.042 | 0.031 | 0.045 |
| **Iron** | 1.3 | 1 | 0.92 |
| **Manganese** | 4.2 | 12 | 7.2 |
| **Zinc** | 0.29 | 0.17 | 0.13 |
| | | | |
| **Anions in mg/l** | | | |
| **Sulphate** | 5500 | 17000 | 20000 |
| **Sulphite** | 2500 | n.d. | n.d. |
| **Thiosulphate** | 5200 | 23000 | 24000 |
| **Carbonate** | 65000 | 120000 | 110000 |
| **Sulfide**[2] | 19943 | | |
| Biologically produced sulfur compounds (elemental sulfur) : thiosulphate | | 1:1 | 1:1 |

### Example 2

**Table 2**

| Method of Example 1 | Savings in caustic consumption[2] |
|---|---|
| Results without premixing[1] | 0 kg NaOH/kg S removed |
| Results with premixing[1] | 2.6 kg NaOH/kg S removed |
| [1] Influent pulp mill stream - green liquor<br>[2] Isolated from the effluent | |

Premixing the highly concentrated industrial alkaline stream (green liquor) needs to be done in order to produce sulphur and regenerate the caustic. In case no premixing is executed there are no savings in the caustic consumption of a pulp mill. When the described method is applied the savings are 2.6 kg NaOH/kg S removed. The reduction in total caustic consumption for a pulp mill will range between 10 - 40%.

### Claims

1.    A process for the treatment of industrial alkaline streams comprising sulfide and carbonate, comprising the steps of:

   a) providing an industrial alkaline stream comprising sulfide and carbonate,
   b) supplying the industrial alkaline stream to a bioreactor comprising sulfide oxidizing bacteria and removing sulfide from the industrial alkaline stream by subjecting said stream to sulfide oxidizing bacteria in the presence of oxygen, and supplying a pH adjustment agent to the bioreactor to maintain a pH in the range 8 to 11, to oxidize the sulfide to elemental sulfur,

c) withdrawing from the bioreactor a treated industrial alkaline stream comprising elemental sulfur,

wherein a portion of the sulfide oxidizing bacteria is removed from the bioreactor and mixed with the industrial alkaline stream prior to supplying the industrial alkaline stream to the bioreactor in step b),

wherein the industrial alkaline stream has a carbonate concentration in the range of at least 50 g/L,

wherein the pH adjustment agent is selected from carbon dioxide, sour gas, hydrochloric acid, nitric acid and phosphoric acid, and

wherein oxygen is supplied to the bioreactor by a molecular-oxygen comprising gas.

2. The process according to claim 1, comprising generating the industrial alkaline stream in an ethylene cracking process as an ethylene spent caustic or in a refinery process as a refinery spent caustic or in a pulp mill as a pulp mill stream.

3. The process according to claim 1 or 2, wherein the industrial alkaline stream has a conductivity of at least 70 mS/cm, preferably at least 80 mS/cm, more preferably at least 90 mS/cm, most preferably at least 100 mS/cm.

4. The process according to any one of the preceding claims, wherein the industrial alkaline stream has a sodium concentration in the range of 1 to 6 Molar, preferably 2 to 5 Molar, more preferably 2.5 to 4.5 Molar.

5. The process according to any one of the preceding claims, wherein industrial alkaline stream has a carbonate concentration in the range of at least 60 g/L.

6. The process according to any one of the preceding claims, wherein the industrial alkaline streams comprise other sulfur compounds selected from the group consisting of sulfate, sulfite, thiosulfate and mixtures thereof.

7. The process according to any one of the previous claims, wherein the industrial alkaline stream comprises at least 15 g/L sulfide.

8. The process according to any one of the previous claims, wherein the pH adjustment agent is carbon dioxide gas.

9. The process according to any one of the previous claims, wherein the pH is maintained in the range of 9.5 to 10.2 at 30 °C.

10. The process according to any one of the previous claims, wherein the sulfide oxidizing bacteria belong to the group of *Thioalkalimicrobi* and/or *Thioalkalivibrio.*

11. The process according to any one of the previous claims, wherein the amount of oxygen present in step c) in in the range of 0.5-1.25 mole of oxygen ($O_2$) per mole of $H_2S/HS^-$.

12. The process according to any one of the previous claims, wherein the treated industrial alkaline stream comprises elemental sulfur in the range of 1 - 20 g/l.

13. The process according to any one of the previous claims, comprising step d) separating elemental sulfur from the treated industrial alkaline stream to provide a sulfur depleted alkaline stream, and optionally reusing said sulfur depleted alkaline stream in an industrial process.

14. The process according to a claim 13, wherein the sulfur depleted alkaline stream has a sulfidity of less than 20%, preferably less than 15%, even more preferably less than 10%,

wherein the term sulfidity means the sodium sulfide/sodium hydroxide ratio calculated by dividing the weight of sodium sulfide expressed in g/l on $Na_2O$ basis by the weight of sodium hydroxide plus sodium sulfide also expressed in g/l on $Na_2O$ basis multiplied by 100.

15. The process according to any one of the preceding claims, comprising generating the industrial alkaline stream in an industrial process and wherein the generated industrial alkaline stream is not diluted with water prior to contacting the sulfide oxidizing bacteria.

**Patentansprüche**

1.  Ein Verfahren zur Behandlung industrieller alkalischer Ströme, die Sulfid und Carbonat umfassen, wobei das Verfahren die folgenden Schritte umfasst:

    a) Bereitstellen eines industriellen alkalischen Stroms, der Sulfid und Carbonat umfasst,
    b) Zuführen des industriellen alkalischen Stroms zu einem Bioreaktor, der Sulfid oxidierende Bakterien umfasst, und Entfernen von Sulfid aus dem industriellen alkalischen Strom, indem der Strom Sulfid oxidierenden Bakterien in Gegenwart von Sauerstoff ausgesetzt wird, und Zuführen eines Mittels zum Einstellen des pH-Werts zu dem Bioreaktor, um einen pH-Wert im Bereich von 8 bis 11 aufrechtzuerhalten, um das Sulfid zu elementarem Schwefel zu oxidieren,
    c) Herausziehen eines behandelten industriellen alkalischen Stroms, der elementaren Schwefel umfasst, aus dem Bioreaktor,

    wobei ein Teil der Sulfid oxidierenden Bakterien aus dem Bioreaktor entfernt und mit dem industriellen alkalischen Strom vermischt wird, bevor der industrielle alkalische Strom in Schritt b) dem Bioreaktor zugeführt wird,
    wobei der industrielle alkalische Strom eine Konzentration an Carbonat im Bereich von mindestens 50 g/l hat,
    wobei das Mittel zum Einstellen des pH-Werts aus Kohlenstoffdioxid, Sauergas, Salzsäure, Salpetersäure und Phosphorsäure ausgewählt ist, und
    wobei dem Bioreaktor Sauerstoff durch ein Gas, das molekularen Sauerstoff enthält, zugeführt wird.

2.  Das Verfahren nach Anspruch 1, umfassend ein Erzeugen des industriellen alkalischen Stroms in einem Ethylen-Crackverfahren als ein verbrauchtes Ethylen-Ätzmittel oder in einem Raffinerieverfahren als ein verbrauchtes Raffinerie-Ätzmittel oder in einem Zellstoffwerk als ein Zellstoffwerkstrom.

3.  Das Verfahren nach Anspruch 1 oder 2, wobei der industrielle alkalische Strom eine Leitfähigkeit von mindestens 70 mS/cm, vorzugsweise mindestens 80 mS/cm, mehr bevorzugt mindestens 90 mS/cm, am meisten bevorzugt mindestens 100 mS/cm, aufweist.

4.  Das Verfahren nach einem der vorhergehenden Ansprüche, wobei der industrielle alkalische Strom eine Konzentration an Natrium im Bereich von 1 bis 6 molar, vorzugsweise 2 bis 5 molar, stärker bevorzugt 2,5 bis 4,5 molar, aufweist.

5.  Das Verfahren nach einem der vorhergehenden Ansprüche, wobei der industrielle alkalische Strom eine Konzentration an Carbonat im Bereich von mindestens 60 g/l aufweist.

6.  Das Verfahren nach einem der vorhergehenden Ansprüche, wobei die industriellen alkalischen Ströme andere Schwefelverbindungen umfassen, die aus der Gruppe, bestehend aus Sulfat, Sulfit, Thiosulfat und Mischungen davon, ausgewählt sind.

7.  Das Verfahren nach einem der vorhergehenden Ansprüche, wobei der industrielle alkalische Strom mindestens 15 g/l Sulfid umfasst.

8.  Das Verfahren nach einem der vorhergehenden Ansprüche, wobei das Mittel zum Einstellen des pH-Werts Kohlenstoffdioxidgas ist.

9.  Das Verfahren nach einem der vorhergehenden Ansprüche, wobei der pH-Wert im Bereich von 9,5 bis 10,2 bei 30 °C aufrechterhalten wird.

10. Das Verfahren nach einem der vorhergehenden Ansprüche, wobei die Sulfid oxidierenden Bakterien zu der Gruppe der *Thioalkalimicrobi* und/oder *Thioalkalivibrio* gehören.

11. Das Verfahren nach einem der vorhergehenden Ansprüche, wobei die in Schritt c) vorhandene Menge an Sauerstoff im Bereich von 0,5 - 1,25 Mol Sauerstoff ($O_2$) pro Mol $H_2S/HS^-$ liegt.

12. Das Verfahren nach einem der vorhergehenden Ansprüche, wobei der behandelte industrielle alkalische Strom elementaren Schwefel im Bereich von 1 - 20 g/l umfasst.

**13.** Das Verfahren nach einem der vorhergehenden Ansprüche, umfassend Schritt d) Abtrennen von elementarem Schwefel aus dem behandelten industriellen alkalischen Strom, um einen an Schwefel verarmten alkalischen Strom bereitzustellen, und optional Wiederverwenden des an Schwefel verarmten alkalischen Stroms in einem industriellen Verfahren.

**14.** Das Verfahren nach Anspruch 13, wobei der an Schwefel verarmte alkalische Strom eine Sulfidität von weniger als 20 %, vorzugsweise weniger als 15 %, noch stärker bevorzugt weniger als 10 % aufweist, wobei der Begriff Sulfidität das Verhältnis Natriumsulfid / Natriumhydroxid bedeutet, das durch Dividieren des Gewichts an Natriumsulfid, ausgedrückt in g/l auf der Basis von $Na_2O$, durch das Gewicht an Natriumhydroxid, ebenfalls ausgedrückt in g/l auf der Basis von $Na_2O$, multipliziert mit 100, berechnet wird.

**15.** Das Verfahren nach einem der vorhergehenden Ansprüche, umfassend ein Erzeugen des industriellen alkalischen Stroms in einem industriellen Verfahren und wobei der erzeugte industrielle alkalische Strom nicht mit Wasser verdünnt wird, bevor er mit den Sulfid oxidierenden Bakterien in Kontakt gebracht wird.

**Revendications**

**1.** - Procédé pour le traitement de courants alcalins industriels comprenant du sulfure et du carbonate, comprenant les étapes consistant à :

a) fournir un courant alcalin industriel comprenant du sulfure et du carbonate ;
b) adresser le courant alcalin industriel à un bioréacteur comprenant des bactéries d'oxydation de sulfure et retirer le sulfure du courant alcalin industriel en soumettant ledit courant aux bactéries d'oxydation de sulfure en présence d'oxygène, et adresser un agent d'ajustement de pH au bioréacteur pour maintenir un pH dans la plage de 8 à 11, pour oxyder le sulfure en soufre élémentaire ;
c) soutirer du bioréacteur un courant alcalin industriel traité comprenant du soufre élémentaire,

une partie des bactéries d'oxydation de sulfure étant retirée du bioréacteur et mélangée avec le courant alcalin industriel avant d'adresser le courant alcalin industriel au bioréacteur dans l'étape b),
le courant alcalin industriel ayant une concentration en carbonate dans la plage d'au moins 50 g/L,
l'agent d'ajustement de pH étant choisi parmi le dioxyde de carbone, un gaz acide, l'acide chlorhydrique, l'acide nitrique et l'acide phosphorique, et
l'oxygène étant adressé au bioréacteur par un gaz comprenant de l'oxygène moléculaire.

**2.** - Procédé selon la revendication 1, comprenant la génération du courant alcalin industriel dans un procédé de craquage d'éthylène en tant que caustique usé d'éthylène ou dans un procédé de raffinerie en tant que caustique usé de raffinerie ou dans une usine de pâte à papier en tant que courant d'usine de pâte à papier.

**3.** - Procédé selon l'une des revendications 1 ou 2, dans lequel le courant alcalin industriel a une conductivité d'au moins 70 mS/cm, de préférence d'au moins 80 mS/cm, de façon davantage préférée d'au moins 90 mS/cm, de la façon que l'on préfère le plus d'au moins 100 mS/cm.

**4.** - Procédé selon l'une quelconque des revendications précédentes, dans lequel le courant alcalin industriel a une concentration en sodium dans la plage de 1 à 6 Molaire, de préférence de 2 à 5 Molaire, de façon davantage préférée de 2,5 à 4,5 Molaire.

**5.** - Procédé selon l'une quelconque des revendications précédentes, dans lequel le courant alcalin industriel a une concentration en carbonate dans la plage d'au moins 60 g/L.

**6.** - Procédé selon l'une quelconque des revendications précédentes, dans lequel les courants alcalins industriels comprennent d'autres composés du soufre choisis dans le groupe consistant en sulfate, sulfite, thiosulfate et les mélanges de ceux-ci.

**7.** - Procédé selon l'une quelconque des revendications précédentes, dans lequel le courant alcalin industriel comprend au moins 15 g/L de sulfure.

**8.** - Procédé selon l'une quelconque des revendications précédentes, dans lequel l'agent d'ajustement de pH est du dioxyde de carbone gazeux.

9. - Procédé selon l'une quelconque des revendications précédentes, dans lequel le pH est maintenu dans la plage de 9,5 à 10,2 à 30 °C.

10. - Procédé selon l'une quelconque des revendications précédentes, dans lequel les bactéries d'oxydation de sulfure appartiennent au groupe de *Thioalkalimicrobi* et/ou *Thioalkalivibrio.*

11. - Procédé selon l'une quelconque des revendications précédentes, dans lequel la quantité d'oxygène présente à l'étape c) est dans la plage de 0,5 - 1,25 mole d'oxygène ($O_2$) par mole de $H_2S/HS^-$.

12. - Procédé selon l'une quelconque des revendications précédentes, dans lequel le courant alcalin industriel traité comprend du soufre élémentaire dans la plage de 1 - 20 g/l.

13. - Procédé selon l'une quelconque des revendications précédentes, comprenant l'étape d) consistant à séparer du soufre élémentaire à partir du courant alcalin industriel traité pour fournir un courant alcalin appauvri en soufre, et facultativement à réutiliser ledit courant alcalin appauvri en soufre dans un procédé industriel.

14. - Procédé selon la revendication 13, dans lequel le courant alcalin appauvri en soufre a une sulfidité inférieure à 20%, de préférence inférieure à 15%, de façon encore plus préférée inférieure à 10%, le terme sulfidité signifiant le rapport sulfure de sodium/hydroxyde de sodium calculé en divisant le poids de sulfure de sodium, exprimé en g/l, sur la base de $Na_2O$, par le poids d'hydroxyde de sodium plus sulfure de sodium, également exprimé en g/l, sur la base de $Na_2O$, multiplié par 100.

15. - Procédé selon l'une quelconque des revendications précédentes, comprenant la génération du courant alcalin industriel dans un procédé industriel, et dans lequel le courant alcalin industriel généré n'est pas dilué avec de l'eau avant d'entrer en contact avec les bactéries d'oxydation de sulfure.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9804503 A
- US 2017009258 A
- US 6156205 A
- WO 2005044742 A
- WO 2009101090 A1